Europäisches Patentamt

**European Patent Office**

Office européen des brevets

(19)

(11) Numéro de publication: **0 203 005 B1**

(12) **FASCICULE DE BREVET EUROPEEN**

(45) Date de publication du fascicule du brevet:
02.11.89

(51) Int. Cl.⁴: **G09F 13/22, H05B 33/12, H04N 9/30**

(21) Numéro de dépôt: **86401045.9**

(22) Date de dépôt: **15.05.86**

(54) Ecran matriciel électroluminescent trichrome et procédé de fabrication.

(30) Priorité: **20.05.85 FR 8507556**

(43) Date de publication de la demande:
**26.11.86 Bulletin 86/48**

(45) Mention de la délivrance du brevet:
**02.11.89 Bulletin 89/44**

(84) Etats contractants désignés:
**DE GB NL**

(56) Documents cités:
**US-A- 3 531 648**
**US-A- 3 753 231**
**US-A- 4 035 774**
**US-A- 4 155 030**

**IBM TECNICAL DISCLOSURE BULLETIN,**
vol. 25, no. 9, février 1983, page 4924, IBM Corp., New York, US; P. PLESHKO: "Conductor arrangement for producing multiple intensity levels in an acplasma display panel"
**SID, 8 NATIONAL SYMPOSIUM PROCEEDINGS,** mai 1967, pages 73-82; J. FROST: "An inexpensive technique for color electroluminescent display"

(73) Titulaire: **Menn, Roger, 5, rue Latour prolongée, F-60140 Liancourt(FR)**
Titulaire: **Brunel, Christian, 5 rue Molière, F-92120 Montrouge(FR)**
Titulaire: **Pécile née Benoist, Claude Marie-Josèphe, 59, rue de la Bourgogne, F-95430 Auvers sur Oise Val d'Oise(FR)**
Titulaire: **Pécile, Bruno Claude Dario, 59, rue de la Bourgogne, F-95430 Auvers sur Oise Val d'Oise(FR)**
Titulaire: **Pécile, Christophe Joseph, 59, rue de la Bourgogne, F-95430 Auvers sur Oise Val d'Oise(FR)**

(72) Inventeur: **Menn, Roger, 5, rue Latour prolongée, F-60140 Liancourt(FR)**
Inventeur: **Brunel, Christian, 5 rue Molière, F-92120 Montrouge(FR)**
Inventeur: **Pécile née Benoist, Claude Marie-Josèphe, 59, rue de la Bourgogne, F-95430 Auvers sur Oise Val d'Oise(FR)**
Inventeur: **Pécile, Bruno Claude Dario, 59, rue de la Bourgogne, F-95430 Auvers sur Oise Val d'Oise(FR)**
Inventeur: **Pécile, Christophe Joseph, 59, rue de la Bourgogne, F-95430 Auvers sur Oise Val d'Oise(FR)**

(74) Mandataire: **Martin, Jean-Jacques et al, Cabinet REGIMBEAU 26, Avenue Kléber, F-75116 Paris(FR)**

## Description

La présente invention concerne le domaine des écrans matriciels, en particulier des écrans plats.

La présente invention concerne plus précisément un écran matriciel électroluminescent trichrome et son procédé de fabrication.

On a déjà proposé différents écrans plats parmi lesquels on citera les écrans formés de panneaux à plasma et les écrans électroluminescents, pour ce qui est des écrans plats actifs, ou encore les écrans plats à cristal liquide pour ce qui est des écrans plats dits passifs.

D'une façon générale, ces écrans plats se composent de deux plaques ou lames parallèles dont l'une au moins est transparente, respectivement revêtues de réseaux orthogonaux d'électrodes, entre lesquelles est disposé un matériau électro-optique.

Le croisement des n électrodes de lignes et m électrodes de colonnes définit nm cellules électro-optiques dont l'état est commandé par les potentiels appliqués sur lesdites électrodes.

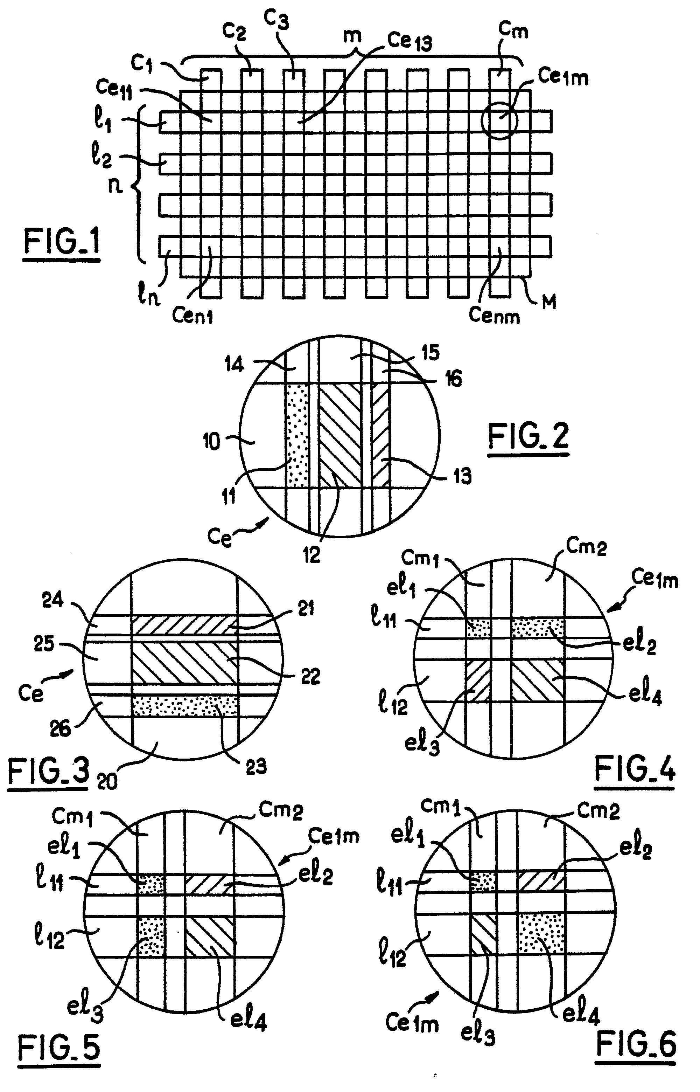

On aperçoit sur la figure 1, une matrice M de nm cellules électro-optiques référencée $ce_{11}$ à $ce_{nm}$ définie par les croisements de n électrodes de lignes référencées $l_1$ à $l_n$ et m électrodes de colonnes référencées $c_1$ à $c_m$.

Malgré les nombreuses études et recherches relatives aux écrans plats, peu de réalisations commerciales sont actuellement proposées.

La Société Japonaise SEIKO propose un écran matriciel à cristaux liquides référencé FT 1616, dans lequel la trichomie est obtenue au moyen d'un réseau de filtres optiques.

La Société Japonaise SHARP CORPORATION, la Société Finlandaise LOHJA CORPORATION et la Société Américaine PLANAR SYSTEM proposent des modules d'écrans matriciels électroluminescents, n lignes x m colonnes, au ZnS: Mn émettant dans le jaune. Ces écrans matriciels déploient de l'information alpha-numérique et graphique avec une brillance d'au moins 50cd/m² et un pas d'élément d'images compris entre 0,3 et 0,4mm.

Le document SID 82 DIGEST pages 128-129 (R.E. COOVERT et al.) fait état pour la réalisation d'écrans électroluminescents bichromes d'un empilement de deux éléments électroluminescents. L'électrode commune formée d'un film électriquement conducteur et transparent est en ITO (Indium Tin Oxyde). La fiabilité de ce type d'écrans laisse à désirer. L'élaboration d'un film en ITO demande souvent des traitements thermiques à 500°C et ces températures sont préjudiciables à la tenue des couches diélectriques dans le temps.

Le brevet US 4 155 030 (IFAY CHANG) décrit un écran polychrome mettant en oeuvre un phénomène de mémoires internes.

La présente invention a pour but de proposer un écran matriciel électroluminescent trichrome perfectionné, par juxtaposition de sous-éléments électroluminescents choisis dans trois couleurs de base.

La fourchette de performance électro-optique d'une structure électroluminescente pour entrer dans la constitution d'un écran matriciel complexe (nombre de lignes supérieur à 100) est 0,1 à 1 Cd/m²/Hz. En effet, la durée des impulsions d'excitation ne doit pas descendre en-dessous de 20 µs sous peine d'une décroissance importante de la luminance. La fréquence trame dans ces conditions est limitée vers 200 à 300 Hz.

On ne dispose pas actuellement de trois matériaux doués de propriétés électroluminescentes par couplage capacitif qui présentent des caractéristiques électro-optiques identiques (ou du moins très voisines).

Néanmoins, il est souhaitable de disposer au niveau de chacune des nm cellules de l'écran matriciel trois sources aux couleurs de base (rouge, vert, bleu) de luminance voisine, ou tout du moins dont la combinaison à pleine luminance donne le blanc de référence.

Pour cela, compte-tenu de la dispersion des caractéristiques électro-optiques des matériaux électroluminescents actuellement disponibles, il est proposé selon l'invention d'adapter la surface des trois sources prévues au niveau de chaque cellule, de telle sorte que le produit de chacune des surfaces de ces sources par la luminance brute respective de celles-ci soit égal à une constante.

Les premières solutions qui viennent à l'esprit pour juxtaposer trois sources aux couleurs de base au niveau de chacune des nm cellules électroluminescentes de l'écran matriciel consistent à diviser chacune de celles-ci soit en une sous-matrice du type une ligne-trois colonnes comme illustré sur la figure 2, soit en une sous-matrice du type trois lignes-une colonne comme illustré sur la figure 3 (v. par exemple US-A 3 531 648).

On aperçoit sur la figure 2 une cellule électroluminescente Ce comprenant trois éléments 11, 12, 13 de couleurs différentes formés au croisement d'une électrode de ligne 10 et de trois électrodes de colonnes 14, 15 et 16.

On aperçoit par ailleurs sur la figure 3 une cellule électroluminescente Ce qui comprend trois éléments émetteurs 21,22,23 formés au croisement d'une électrode de colonne 20 et de trois électrodes de lignes 24, 25 et 26.

La surface des sources, référencées 11, 12 et 13 sur la figure 2, référencés 21, 22 et 23 sur la figure 3, peut être contrôlée directement par la largeur des électrodes de commande associées référencées 10, 14, 15 et 16 sur la figure 2 et 20, 24, 25 et 26 sur la figure 3, de façon à contrôler en conséquence la luminance des différentes sources.

Les inventeurs ont néamoins déterminé que ces juxtapositions du type une ligne-trois colonnes ou trois lignes.une colonne au niveau de chacune des cellules présentent de nombreux inconvénients et ont cherché à perfectionner les écrans matriciels électroluminescents plats.

La solution retenue par les Déposants consiste à réaliser un écran matriciel électroluminescent comprenant nm cellules électroluminescentes émettrices agencées sous forme d'une matrice de n lignes m colonnes dans lequel chaque cellule est formée d'une sous-matrice, deux lignes, deux colonnes, de quatre éléments émetteurs électroluminescents choisis dans trois couleurs de base différentes,de telle sorte qu'au niveau de chaque cellule deux éléments émettent un rayonnement de même couleur, la surface des différents éléments étant adaptée pour obtenir au niveau de chaque cellule trois sources de couleurs différentes mais de luminance voisine.

Chacune des cellules de l'écran matriciel électroluminescent comprend par conséquent deux électrodes de lignes et deux électrodes de colonnes dont les intersections déterminent quatre éléments émetteurs électroluminescents.

Les trois couleurs de base (rouge, vert et bleu) sont distribuées dans les quatre éléments émetteurs lumineux, deux de ces éléments recevant donc les mêmes couleurs. Ces différents éléments peuvent avoir des aires inégales définies par la largeur des électrodes de lignes et des électrodes de colonnes et adaptés pour obtenir des luminances voisines pour chaque source des trois couleurs de base.

Chacune des cellules ayant deux électrodes de lignes et deux électrodes de colonnes, l'écran comporte $2n$ électrodes de lignes et $2m$ électrodes de colonnes.

On a représenté sur les figures 4, 5 et 6 différentes variantes de réalisation d'une cellule électroluminescente d'un écran matriciel électroluminescent trichrome conforme à la présente invention.

Sur ces figures 4, 5 et 6, on aperçoit deux électrodes de lignes référencées $l_{l1}$ et $l_{l2}$ et deux électrodes de colonnes référencées $c_{m1}$ et $c_{m2}$.

Le croisement de ces deux électrodes de lignes $l_{l1}$, $l_{l2}$ et de ces deux électrodes de colonnes $c_{m1}$ et $c_{m2}$ définit quatre éléments électroluminescents $el_1$, $el_2$, $el_3$ et $el_4$.

Par rapport aux juxtapositions du type une ligne-trois colonnes et trois lignes-une colonne illustrées sur les figures 2 et 3, l'agencement conforme à la présente invention de chaque cellule sous forme d'une sous-matrice deux lignes deux colonnes présente les avantages suivants :
- plus grande latitude d'ajustage des aires de chacune des couleurs,
- plus grande largeur des électrodes, en particulier plus grande largeur des électrodes de colonnes ITO par rapport à la disposition une ligne-trois colonnes, d'où une plus faible résistance série de ces électrodes,
- taux de multiplexage plus faible que dans les cas de la disposition trois lignes-une colonne,
- chacune des électrodes de lignes ou colonnes "voit"au plus deux couleurs. Si les accès sont interdigités dans les deux directions, les circuits disposés sur un même côté de l'écran auront tous la même tension de fonctionnement, ce qui limite, dans une large mesure, les problèmes de connexion,
- possibilité d'utilisation de circuits de commande pour écrans monochromes, du type tout ou rien avec obtention de huit couleurs (les trois couleurs primaires, les trois mélanges binaires, le blanc et le noir) ou du type demi-teinte,
- réduction du nombre de circuits de commande dans le cas où l'écran présente plus de colonnes que de lignes, ce qui est le cas le plus généralement rencontré.

La distribution des trois couleurs dans les quatre élements prévus au niveau de chacune des nm cellules de la matrice peut faire l'objet de diverses variantes.

Comme cela est illustré schématiquement sur la figure 4, les deux éléments électroluminescents de même couleur,($el_1$ et $el_2$) peuvent être disposés selon les lignes des sous-matrices. Cette disposition semble actuellement préférée.

Néanmoins, comme cela est illustré schématiquement sur la figure 5, les deux éléments électroluminescents ($el_1$, et $el_3$) de même couleur, peuvent être disposés selon les colonnes des sous-matrices.

Enfin, comme cela est illustré schématiquement sur la figure 6, les deux éléments électroluminescents de même couleur ($el_1$ et $el_4$) peuvent être disposés selon les diagonales des sous-matrices.

L'écran matriciel électroluminescent trichrome qui vient d'être décrit peut être utilisé par exemple avec une maquette d'adressage du type décrit dans le document SID 84 DIGEST pages 242-244 (T.GIELOW et al).

Les matériaux électroluminescents les plus couramment utilisés sont les composés II-VI et plus particulièrement ZnS.

On se reportera utilement aux documents Japanese Journal of Applied Physics volume 21 1982, supplement 21-1 pages 383-387 (T. Suyama et al.) et SID 84 Digest pages 249-250 (W.A. Barrow) pour l'analyse d'autres composés doués de propriétés électroluminescentes.

Les écrans matriciels électroluminescents trichromes conformes à la présente invention peuvent trouver application dans les consoles télématiques et informatiques, les terminaux d'annuaires électroniques, les micro-ordinateurs or encore les postes de télévision en couleur à écran plat.

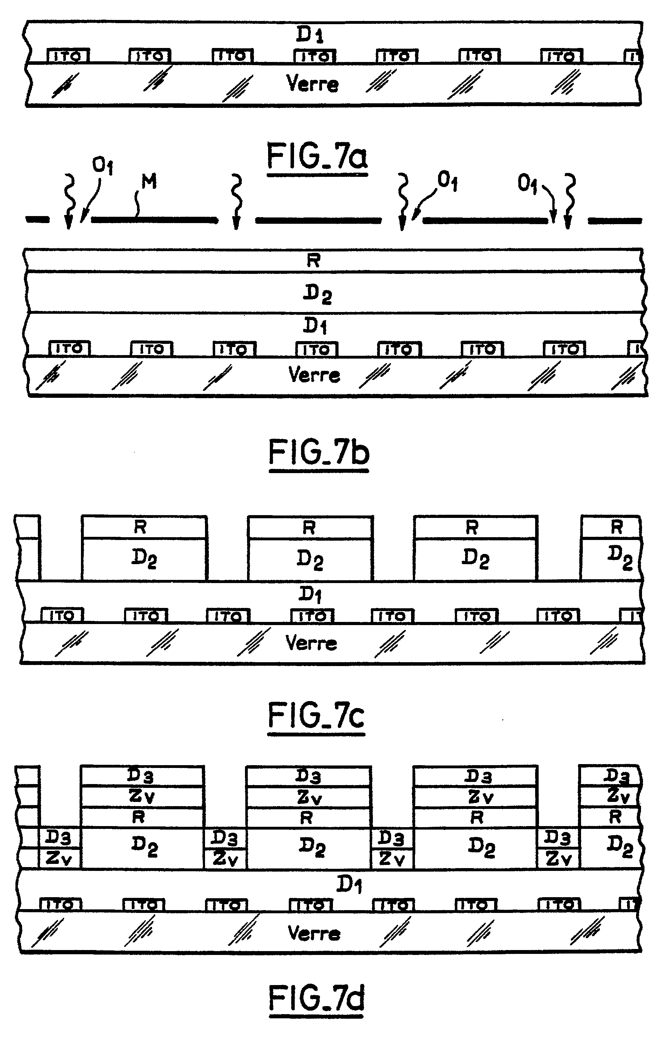

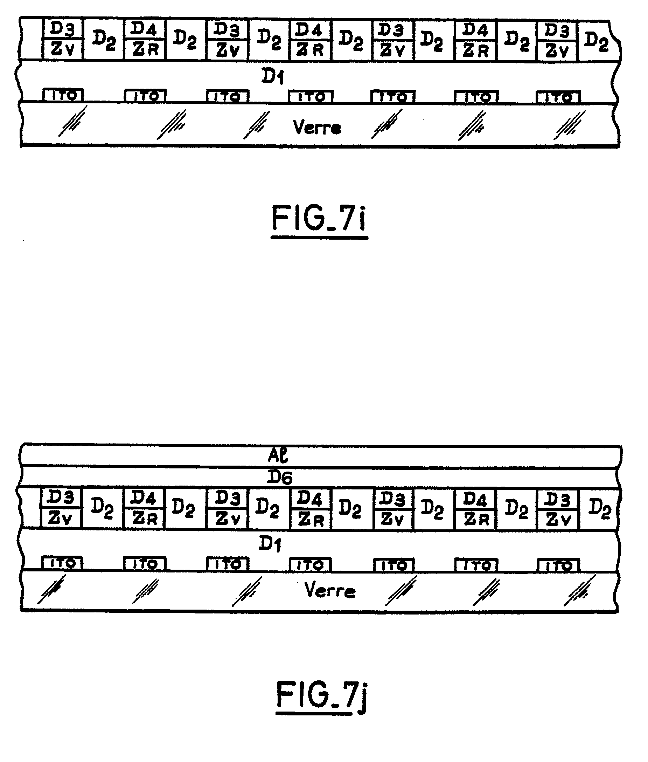

On va maintenant décrire un procédé de fabrication des écrans matriciels électroluminescents trichromes conformes à la présente invention en regard des figures 7a à 7j annexées.

Comme cela est illustré sur la figure 7a, des électrodes transparentes parallèles ITO (Indium Tin Oxyde) sont formées selon un procédé classique sur un substrat en verre.

Le substrat en verre et les électrodes ITO sont ensuite recouverts d'une première couche de diélectrique $D_1$.

Comme illustré sur la figure 7b, une seconde couche de diélectrique $D_2$ est déposée sur la première couche diélectrique $D_1$. La seconde couche de diélectrique $D_2$ est recouverte d'une couche de résine photosensible R.

Un masque M est alors superposé à la résine photosensible R.

Le masque M est muni d'une pluralité d'orifices $O_1$ répartis selon une série de rangées parallèles.

Les électrodes transparentes ITO constituant une série d'électrodes de colonnes, les orifices $O_1$ réalisés dans le masque M sont répartis selon une série de lignes perpendiculaires aux électrodes de colonnes ITO. La dimension des orifices réalisés dans le masque et l'espacement entre ceux-ci sont déterminés par les dimensions recherchées pour chaque élément émetteur.

Le masque M est placé sur l'ensemble verre-ITO-$D_1$-$D_2$-R de telle sorte que les ouvertures $O_1$ soient superposées à une électrode de colonnes sur deux.

La résine photosensible est alors insolée à travers le masque M comme illustré schématiquement sur la figure 7b.

A l'aide d'un agent de révélation des ouvertures sont réalisées dans la couche de résine photosensible R, puis après attaque dans la seconde couche diélectrique $D_2$, telles qu'illustrées sur la figure 7c. On remarquera que ces ouvertures sont superposées à certaines des électrodes de colonnes ITO.

Comme cela est illustré sur la figure 7d, un composé $Z_V$ doué de propriétés électroluminescentes est déposé sur l'ensemble. Au niveau des ouvertures, ce composé $Z_V$ vient au contact de la première couche diélectrique $D_1$. Le composé doué de propriétés électroluminescentes $Z_V$ est recouvert d'une troisième couche de diélectrique $D_3$.

Enfin, comme cela est illustré sur la figure 7e, les portions restantes de la couche de résine photosensible R ainsi que les couches $Z_V$ et $D_3$ superposées à celle-ci sont éliminées à l'aide d'un agent de décapage.

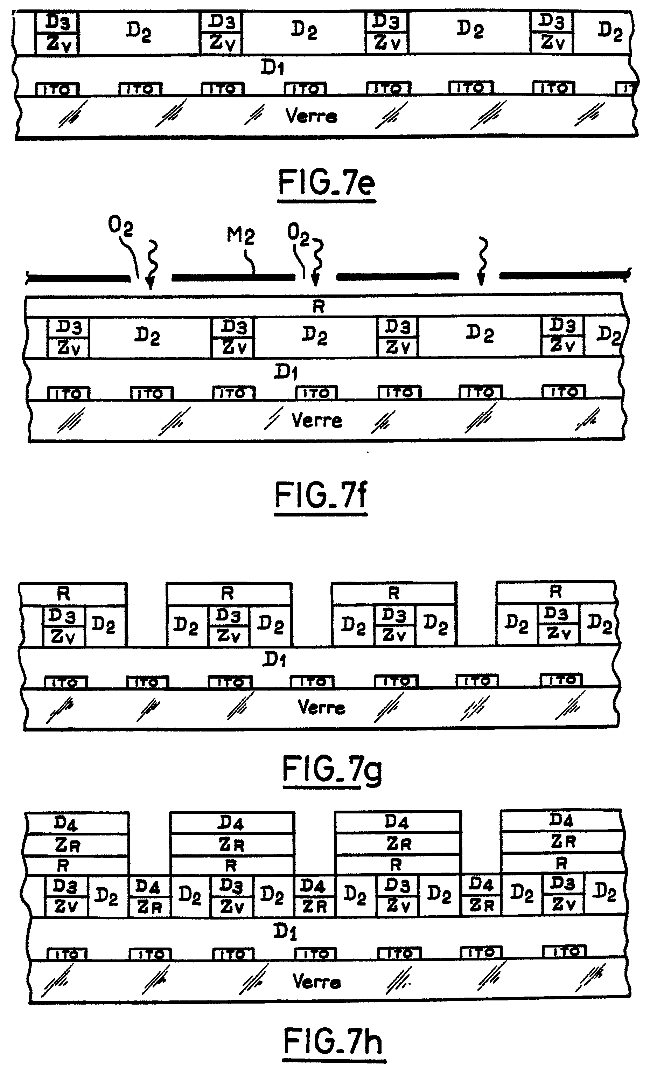

Comme illustré sur la figure 7f, une nouvelle couche de résine photosensible est déposée sur l'ensemble.

Un second masque $M_2$ est superposé à la résine photosensible R.

Ce masque $M_2$ comprend également des orifices $O_2$ s'étendant selon une série de lignes orthogonales aux électrodes ITO et coïncidant avec les lignes définies par les ouvertures réalisées précédemment à l'étape 7c.

Néanmoins, le second masque $M_2$ est superposé à l'ensemble de telle sorte que les orifices ménagés dans ce second masque soient disposés au-dessus des électrodes de colonnes ITO recouvertes par la seconde couche diélectrique $D_2$, c'est-à-dire non sous-jacentes à un composé électroluminescent $Z_V$.

La résine photosensible R est alors insolée à travers le masque $M_2$.

Puis, comme cela est représenté sur la figure 7g, une seconde série d'ouvertures est réalisée dans la couche de résine photosensible R et dans la seconde couche diélectrique $D_2$, grâce à un agent révélateur et à une gravure en regard des électrodes transparentes ITO non sous-jacentes à un matériau électroluminescent $Z_V$.

Comme cela est illustré sur la figure 7h, un composé $Z_R$ doué de propriétés électroluminescentes est déposé sur l'ensemble. Au niveau de la dernière série d'ouvertures, le composé $Z_R$ doué de propriétés électroluminescentes est porté au contact de la première couche diélectrique $D_1$. L'ensemble ainsi formé est de plus revêtu d'une quatrième couche de diélectrique $D_4$.

Bien entendu, de préférence, le second composé $Z_R$ doué de propriétés électroluminescentes émet dans une couleur de base différente de celle du premier composé $Z_V$ doué de propriétés électroluminescentes.

Comme cela est représenté sur la figure 7i, les portions restantes de la couche de résine photosensible R et les couches $Z_R$ et $D_4$ superposées à celle-ci sont éliminées par un agent de décapage.

La structure ainsi obtenue est formée d'un substrat en verre muni d'une série d'électrodes parallèles transparentes ITO revêtues d'une première couche de diélectrique $D_1$ elle-même recouverte d'une seconde couche de diélectrique $D_2$. Cette seconde couche de diélectrique $D_2$ est munie d'une pluralité d'orifices répartis selon des lignes s'étendant transversalement aux électrodes transparentes ITO. Les orifices réalisés dans la seconde couche diélectrique $D_2$ sont superposés aux électrodes transparentes ITO.

Au niveau de chacune de ces lignes, les orifices réalisés dans la seconde couche diélectrique $D_2$ sont remplis alternativement d'un premier composé doué de propriétés électroluminescentes $Z_V$ et d'un second composé doué de propriétés électroluminescentes $Z_R$.

Le premier composé doué de propriétés électroluminescentes $Z_V$ est recouvert d'une troisième couche de diélectrique $D_3$ tandis que le second composé doué de propriétés électroluminescentes $Z_R$ est revêtu d'une quatrième couche de diélectrique $D_4$.

Chaque paire de premier et second composés doués de propriétés électroluminescentes $Z_V$-$Z_R$ au niveau d'une ligne précitée, constitue deux éléments de ligne commune d'une sous-matrice des cellules de l'écran.

On remarquera que, comme cela est représenté sur les figures annexées, de préférence, l'épaisseur de la seconde couche de diélectrique $D_2$ est égale à la somme des épaisseurs des couches $D_3$ et $Z_V$ ou $D_4$ et $Z_R$.

Il reste à former les deux éléments de la seconde ligne de chaque sous-matrice.

Dans le cas où la configuration retenue pour la couleur apparaissant deux fois au niveau de chaque cellule est du type colonne illustré sur la figure 5 ou diagonale illustré sur la figure 6, les deux éléments de la seconde ligne de chaque sous-matrice sont réalisés selon un processus similaire aux étapes illustrées sur la figure 7a à 7i, en réalisant de nouveaux orifices dans la seconde couche diélectrique $D_2$, en regard des électrodes de colonnes ITO, selon une seconde série de lignes transversales aux électrodes de colonnes ITO, et intercalées entre les lignes précédentes définies par les composés $Z_V$ et $Z_R$.

Les composés doués de propriétés électroluminescentes déposés dans cette seconde série d'orifices correspondent l'un à un troisième composé électroluminescent $Z_B$, l'autre à l'un des composés $Z_V$ ou $Z_R$ précités.

Par contre, dans le cas où la configuration retenue pour la couleur apparaissant deux fois au niveau de chaque cellule est du type en ligne tel qu'illustré sur la figure 4, les deux autres éléments de chaque sous-matrice sont réalisés selon un processus similaire aux étapes illustrées sur les figures 7a à 7e, en utilisant toutefois un masque muni d'orifices O superposés à chaque électrode transparente ITO et en déposant dans les orifices alors formés un troisième composé $Z_B$ électroluminescent.

Enfin, comme cela est représenté sur la figure 7j, une nouvelle couche de diélectrique $D_6$ est de préférence déposée sur l'ensemble, puis une série d'électrodes de lignes parallèles Al, s'étendant perpendiculairement aux électrodes de colonne ITO est déposée sur la couche diélectrique $D_6$.

Néanmoins, si les couches de diélectrique $D_3$, $D_4$ et $D_5$ sont suffisamment performantes, la couche $D_6$ n'est pas absolument nécessaire.

Le procédé de fabrication qui vient d'être décrit met en oeuvre des opérations de dépôt de films simples et de photogravures connues individuellement, dans leur principe. Le procédé ne sera donc pas décrit plus en détail par la suite.

On remarquera que la séquence des opérations qui vient d'être décrite permet de protéger constamment les matériaux électro-optiques $Z_V$, $Z_R$ et $Z_B$ par une couche de diélectrique, vis-à-vis des agents de gravure.

Par ailleurs, la séquence des opérations précédemment décrites permet d'obtenir une structure coplanaire, avantageuse pour éliminer les propagations de claquages qui aboutissent à des interruptions d'électrodes.

Bien entendu, la présente invention n'est aucunement limitée aux modes de réalisation qui viennent d'être décrits mais s'étend à toute variante conforme à son esprit.

Comme on l'a évoqué précédemment, la distribution des trois couleurs dans les quatre éléments prévus au niveau de chacune desdites nm cellules de la matrice peut faire l'objet de diverses variantes illustrées respectivement sur les figures 4, 5 et 6.

La disposition représentée sur la figure 4, dans laquelle les deux éléments électro-luminescents de même couleur sont disposés selon les lignes des sous-matrices, semble actuellement préférée.

Cette disposition semble en effet la plus simple en ce qui concerne la génération des tensions de contrôle appliquées à chaque élément.

On rappelle en effet que chaque élément est soumis à un cycle de tensions de polarité alternée, respectivement de rafraîchissement et d'extinction. La tension d'extinction est commune à tous les éléments d'une ligne, et pour une ligne bicolore, il faut que la tension d'extinction soit la plus faible des deux tensions des deux matériaux, un accroissement de la tension de modulation étant nécessaire pour le matériau sous-alimenté.

On notera néanmoins que la disposition diagonale illustrée sur la figure 6 permet d'éviter en partie l'effet de moiré.

Les surfaces des différents éléments, au niveau de chaque cellule sont déterminées selon le principe suivant.

On définit tout d'abord les taux d'occupation de la surface :

$$(1) \quad \tau' = \frac{\text{aire des zones émettrices de la cellule trichrome (aire utile)}}{\text{aire totale de la cellule trichrome}}$$

$$(2) \quad \tau_B = \frac{\text{aire de la zone émettrice bleue}}{\text{aire utile.}}$$

$$(3) \quad \tau_V = \frac{\text{aire de la zone émettrice verte}}{\text{aire utile}}$$

$$(4) \quad \tau_R = \frac{\text{aire de la zone émettrice rouge}}{\text{aire utile.}}$$

puis, on définit les luminances apparentes de chaque élément par les relations :

(5) $L_{Ba} = L_B \tau' \tau_B$

(6) $L_{Va} = L_V \tau' \tau_V$ et

(7) $L_{Ra} = L_R \tau' \tau_R$ ,

dans lesquelles ; $L_B$, $L_V$ et $L_R$ représentent les luminances vraies de chaque élément.

Enfin, les paramètres $\tau_B$, $\tau_V$ , $\tau_R$ sont calculés sur la base des relations suivantes ;

(8) $\tau_B + \tau_V + \tau_R = 1$

(9) $L_{Ba} = L_{Va} = L_{Ra}$ .

On va maintenant donné, à titre d'example non limitatif, un mode de réalisation particulier d'écran matriciel trichrome conforme à la présente invention :

le matériau $Z_B$ émettant dans le bleu est du : $SrS : CeF_3$ (confer W.A. BARROW et al, SID DIGEST 1984, p. 249-250, on admettra $L_B = 15$ Cd/m² à 250 Hz),

le matériau $Z_V$ émettant dans le vert est du $ZnS : TbF_3$ (confer Ohnishi, Electrochemical Society, Fall Meeting, Octobre 7-12-1984 Extended Abstracts p. 880-881, on admettra $L_V = 1$Cd/m²/Hz jusqu'à 250 Hz),

le matériau $Z_R$ émettant dans le rouge est du $ZnS : SmF_3$ (confer T. Suyama et al, Japanese Journal of Applied Physics, vol. 81 (1982) Supplément 21-1 p. 383-387, on admettra $L_R = 34$ Cd/m² à 250 Hz).

Le pas vertical des cellules, égale au pas horizontal, égale 400µ,

- la largeur des sillons entre éléments électroluminescents est de 20µ,

- le paramètre $\tau' = 0,8$,

- on adopte : $\tau_B = 0,6$, $\tau_V = 0,15$, $\tau_R = 0,25$,

- les luminances apparentes théoriques sont :

$L_{Ba} = L_B \tau' \tau_B = 7$ Cd/m²,

$L_{Va} = L_V \tau' \tau_V = 30$Cd/m²,

$L_{Ra} = L_R \tau' \tau_R = $ Cd/m²,

- la luminance apparente du vert étant nettement supérieure aux luminances apparentes du bleu et du rouge, on "sous-alimentera" le matériau $Z_V$ pour obtenir $L_{Va} = 7$Cd/m². (On préfère ne pas utiliser $Z_V$ à sa pleine possibilité. Si on avait choisi $\tau_V = 0,05$, on aurait obtenu $L_{Va} = 10$ Cd/m², mais la surface ainsi libérée n'aurait permis qu'un accroissement modeste de $L_{Ba}$ et $L_{Ra}$, soit environ 20 %).

- deux éléments $Z_B$ de couleur bleue sont disposés au niveau de chacune desdites nm cellules, selon une disposition en ligne telle que représentée sur la figure 4.

- largeur de l'électrode Al de ligne commune aux deux éléments $Z_B$ de couleur bleue : 215µ,

- largeur de l'électrode de ligne Al commune aux éléments $Z_R$ et $Z_V$ de couleur rouge et verte : 145 µ

- largeur de l'électrode ITO de colonne commune à l'élément $Z_R$ de couleur rouge et à l'un des éléments $Z_B$ de couleur bleue : 225 µ

- largeur de l'électrode ITO de colonne commune à l'élément $Z_V$ de couleur verte et à l'un des éléments $Z_B$ de couleur bleue : 135 µ,

- le substrat en verre est un verre à vitre ordinaire d'épaisseur 2mm,

- les électrodes SITO de colonne sont en oxyde mixte d'étain et d'indium d'une épaisseur de 100 à 150 nm,

- la couche de diélectrique $D_1$ est en $Ta_2O_5$ d'une épaisseur de 300 nm,

- le diélectrique $D_2$ est en $Y_2O_3$ d'une épaisseur de 1000 nm (soit la somme des épaisseurs de l'un des éléments $Z_V$, ou $Z_R$ ou $Z_B$ et l'une des couches de diélectrique $D_3$, $D_4$ ou $D_5$),

- le matériau $Z_V$ est du $ZnS:TbF_3$ d'une épaisseur de 700 nm,

- le matériau $Z_R$ est du $ZnS:SmF_3$ d'une épaisseur de 700 nm,

- le matériau $Z_B$ est du $SrS:CeF_3$ d'une épaisseur de 700 nm,

- la couche de diélectrique $D_3$ est du $Ta_2O_5$ d'une épaisseur de 300 nm,

- la couche de diélectrique $D_4$ est du $Ta_2O_5$ d'une épaisseur de 300 nm,
- la couche de diélectrique $D_5$ est du $Ta_2O_5$ d'une épaisseur de 300 nm,
- la couche de diélectrique $D_6$ (optionnelle) est du $Ta_2O_5$ d'une épaisseur de 200 nm,
- les électrodes de ligne Al ont une épaisseur de 100 nm.

## Revendications

1. Ecran matriciel électroluminescent comprenant n·m cellules électroluminescentes ($c_e$) émettrices agencées sous forme d'une matrice de n lignes et m colonnes, caractérisé par le fait que chaque cellule ($c_e$ est formée d'une sous-matrice, deux lignes, deux colonnes, de quatre éléments ($el_1$- $el_4$) émetteurs électroluminescents choisis dans trois couleurs de base différentes, de telle sorte que au niveau de chaque cellule ($c_e$ deux éléments (el) émettent un rayonnement de même couleur, la surface des différents éléments étant adaptée pour obtenir, au niveau de chaque cellule, trois sources de couleurs différentes mais de luminance voisine.

2. Ecran matriciel électroluminescent selon la revendication 1, caractérisé par le fait que au niveau de chaque cellule ($c_e$), les deux éléments électroluminescents (el), de même couleur, sont disposés selon les lignes des sous-matrices.

3. Ecran matriciel électroluminescent selon la revendication 1, caractérisé par le fait que au niveau de chaque cellule ($c_e$), les deux éléments électroluminescents de même couleur sont disposés selon les colonnes des sous-matrices.

4. Ecran matriciel électroluminescent selon la revendication 1, caractérisé par le fait que au niveau de chaque cellule ($c_e$), les deux éléments électroluminescents de même couleur sont disposés selon les diagonales des sous-matrices.

5. Procédé de fabrication d'un écran matriciel électroluminescent conforme à l'une des revendications 1 à 4, caractérisé par le fait qu'il comprend les étapes consistant :
i) à former des électrodes transparentes parallèles (ITO) sur un substrat en verre,
ii) à recouvrir le substrat en verre et les électrodes transparentes (ITO) d'une première couche de diélectrique ($D_1$),
iii) à déposer une seconde couche de diélectrique ($D_2$) sur la première couche diélectrique ($D_1$),
iv) à recouvrir la seconde couche de diélectrique ($D_2$) d'une couche de résine photosensible (R),
v) à insoler la résine photosensible (R) à travers un masque puis à réaliser des ouvertures dans la couche de résine photosensible (R) et la seconde couche diélectrique ($D_2$), en regard de certaines au moins des électrodes transparentes (ITO),
vi) à déposer doué de propriétés électroluminescentes ($Z_V$) dans les ouvertures,
vii) à recouvrir l'ensemble d'une troisième couche de diélectrique ($D_3$) et
viii) à éliminer les portions restantes de la couche de résine photosensible (R) et les couches ($Z_V$, $D_3$) superposées à celle-ci.

6. Procédé de fabrication selon la revendication 5, caractérisé par le fait qu'il comprend en outre les étapes ultérieures consistant :
ix) à recouvrir l'ensemble d'une seconde couche de résine photosensible (R),
x) à insoler la résine photosensible à travers un masque puis à réaliser des ouvertures dans la couche de résine photosensible et la deuxième couche diélectrique ($D_2$), en regard de certaines électrodes transparentes (ITO),
xi) à déposer un second composé doué de propriétés électroluminescentes ($Z_R$) dans les ouvertures,
xii) à recouvrir l'ensemble d'une quatrième couche de diélectrique ($D_4$), et
xiii) à éliminer les portions restantes de la couche de résine photosensible (R) et les couches ($R_R$, $D_4$) superposées photosensible (R) et les couches ($Z_R$, $D_4$) superposées à celle-ci.

7. Procédé de fabrication selon les revendications 5 et 6, caractérisé par le fait que les électrodes transparentes (ITO) formées sur le substrat sont disposées selon des colonnes, les ouvertures réalisées aux étapes v) et x) sont formées selon une première série de lignes, et par le fait que le procédé comprend en outre des étapes similaires aux étaapes i) à viii) pour réaliser des ouvertures et déposer un troisième composé doué de propriétés électroluminescentes selon une seconde série de lignes parallèles aux premières.

8. Procédé de fabrication selon l'une des revendications 5 à 7, caractérisé par le fait qu'il comprend en outre les étapes ultérieures consistant à déposer une couche supplémentaire de diélectrique ($D_6$) sur l'ensemble puis à former des électrodes parallèles entre elles et orthogonales aux électrodes transparentes formées à l'étape i),sur la couche supplémentaire de diélectrique.

## Claims

1. An electroluminescent matrix screen comprising $\underline{n} \times \underline{m}$ light emitting cells ($c_e$) arranged in the form of a matrix of $\underline{n}$ lines by $\underline{m}$ columns, characterised in that each cell ($c_e$) is constituted by a two line by two column submatrix of four light emitting elements ($el_1$–$el_4$) selected from three different base colors with each cell (ce) having two (el) of its elements emitting the same color, the areas of the various elements being selected with each cell so as to provide three sources of different colors having similar luminances.

2. An electroluminescent matrix screen according to claim 1, characterised in that the two same-color elements (el) of each cell (ce) are disposed along the lines of the cell submatrix.

3. An electroluminescent matrix screen according to claim 1, characterised in that the two same-color electroluminescent elements of each cell (ce) are disposed along the submatrix columns.

4. An electroluminescent matrix screen according to claim 1, characterised in that the two same-color electroluminescent elements in each cell (ce) are disposed along the diagonals of the submatrix.

5. A method of manufacturing an electroluminescent matrix screen according to one of claims 1 to 4, said method comprising the following steps:

i) forming parallel transparent electrodes (ITO) on a glass substrate;

ii) covering the glass substrate and the transparent electrodes (ITO) with a first dielectric layer ($D_1$);

iii) depositing a second dielectric layer ($D_2$) on said first dielectric layer ($D_1$);

iv) covering the second dielectric layer ($D_2$) with a layer of photosensitive resin (R);

v) exposing the photosensitive resin (R) through a mask and then making openings in the photosensitive layer (R) and said second dielectric layer ($D_2$) over at least some of said transparent electrodes (TIO);

vi) depositing a compound having electroluminescent properties (Zv) in said openings;

vii) covering the assembly with a third dielectric layer ($D_3$) and

viii) eliminating the remaining portions of the photosensitive resin (R) and of the layers (Zv, $D_3$) superposed thereon.

6. A method according to claim 5, further comprising the following subsequent steps:

ix) covering the assembly with a second layer of photosensitive resin (R);

x) exposing the photosensitive resin through a mask and then making openings in the layer of photosensitive resin and the second dielectric layer ($D_2$) over some of said transparent electrodes (ITO);

xi) depositing a second compound having electroluminescent properties (ZR) in said openings;

xii) covering the assembly with a fourth dielectric layer ($D_4$), and

xiii) eliminating the remaining portions of the layer of photosensitive resin (R) and the layers (ZR, $D_4$) superposed thereon.

7. A method according to one of claims 5 or 6 wherein the transparent electrodes (ITO) formed on the substrate are deposited on columns, and the openings made at steps v) and x) are formed along a first series of lines, and wherein the method includes further steps similar to steps i) to viii) for making openings and depositing a third compound having electroluminescent properties along a second series of lines parallel to the first.

8. A method according to one of claims 5 to 7, further including subsequent steps consisting in depositing an additional dielectric layer ($D_6$) over the assembly and then in forming electrodes on said additional dielectric layer, said electrodes being mutually parallel and orthogonal to said transparent electrodes formed at step i).

**Patentansprüche**

1. Elektrolumineszenz-Bildschirm in Matrix-Bauweise, mit n·m emittierenden elektrolumineszierenden Zellen (ce), die in Form einer Matrix aus n Zeilen und m Spalten angeordnet sind, dadurch gekennzeichnet, daß jede Zelle (ce) von einer Untermatrix aus zwei Zeilen, zwei Spalten und vier elektrolumineszierenden emittierenden Elementen (el1 bis el4), die in drei verschiedenen Grundfarben gewählt sind, gebildet ist, derart, daß bei jeder Zelle (ce) zwei Elemente (el) Strahlen von gleicher Farbe emittieren, wobei die Oberfläche der verschiedenen Elemente so adaptiert ist, daß bei jeder Zelle drei in der Farbe verschiedene, in der Leuchtdichte aber sich nahekommende Quellen entstehen.

2. Elektrolumineszenz-Bildschirm in Matrix-Bauweise nach Anspruch 1, dadurch gekennzeichnet, daß bei jeder Zelle (ce) die beiden elektrolumineszierenden Elemente (el) von gleicher Farbe nach den Zeilen der Untermatrizen angeordnet sind.

3. Elektrolumineszenz-Bildschirm in Matrix-Bauweise nach Anspruch 1, dadurch gekennzeichnet, daß bei jeder Zelle (ce) die beiden elektrolumineszierenden Elemente von gleicher Farbe nach den Spalten der Untermatrizen angeordnet sind.

4. Elektrolumineszenz-Bildschirm in Matrix-Bauweise nach Anspruch 1, dadurch gekennzeichnet, daß bei jeder Zelle (ce) die beiden elektrolumineszierenden Elemente von gleicher Farbe in den Diagonalen der Untermatrizen angeordnet sind.

5. Herstellungsverfahren für einen Elektrolumineszenz-Bildschirm in Matrix-Bauweise gemäß einem der Ansprüche 1 bis 4, dadurch gekennzeichnet, daß es die nachstehenden Schritte umfaßt:

i) Ausbilden von parallelen durchsichtigen Elektroden (ITO) auf einem Glassubstrat,

ii) Abdecken des Glassubstrats und der durchsichtigen Elektroden (ITO) mit einer ersten Dielektrikum-Schicht ($D_1$),

iii) Auftragen einer zweiten Dielektrikum-Schicht ($D_2$) auf die erste Dielektrikum-Schicht ($D_1$),

iv) Abdecken der zweiten Dielektrikum-Schicht ($D_2$) mit einer Schicht lichtempfindlichen Harzes (R),

v) Bestrahlen des lichtempfindlichen Harzes (R) mit Sonnenlicht durch eine Maske hindurch, sodann Ausbilden von Öffnungen in der Schicht lichtempfindlichen Harzes (R) und in der zweiten Dielektrikum-

Schicht ($D_2$) wenigstens bestimmten durchsichtigen Elektroden (ITO) gegenüber,

vi) Einbringen einer mit elektrolumineszierenden Eigenschaften versehenen Masse ($Z_V$) in die Öffnungen,

vii) Abdecken des Ganzen mit einer dritten Dielektrikum-Schicht ($D_3$), und

viii) Entfernen der übrigen Teile der Schicht lichtempfindlichen Harzes (R) und der auf diese aufgetragenen Schichten ($Z_V$, $D_3$).

6. Herstellungsverfahren nach Anspruch 5, dadurch gekennzeichnet, daß es ferner die nachfolgenden Schritte umfaßt:

ix) Abdecken des Ganzen mit einer zweiten Schicht lichtempfindlichen Harzes (R),

x) Bestrahlen des lichtempfindlichen Harzes mit Sonnenlicht durch eine Maske hindurch, sodann Ausbilden von Öffnungen in der Schicht lichtempfindlichen Harzes und in der zweiten Dielektrikum-Schicht ($D_2$) bestimmten durchsichtigen Elektroden (ITO) gegenüber,

xi) Einbringen einer zweiten mit elektrolumineszierenden Eigenschaften versehenen Masse ($Z_R$) in die Öffnungen,

xii) Abdecken des Ganzen mit einer vierten Dielektrikum-Schicht ($D_4$), und

xiii) Entfernen der übrigen Teile der Schicht lichtempfindlichen Harzes (R) und der auf diese aufgetragenen Schichten ($Z_R$, $D_4$).

7. Herstellungsverfahren nach den Ansprüchen 5 und 6, dadurch gekennzeichnet, daß die auf dem Substrat ausgebildeten durchsichtigen Elektroden (ITO) nach Spalten angeordnet sind, daß die in den Schritten (v) und (X) hergestellten Öffnungen in einer ersten Gruppe von Zeilen ausgebildet sind, und dadurch, daß das Verfahren außerdem den Schritten (i) bis (viii) ähnliche Schritte zur Ausbildung von Öffnungen und Einbringen einer dritten mit elektrolumineszierenden Eigenschaften versehenen Masse in einer zweiten Gruppe von zu den ersten Linien parallelen Linien umfaßt.

8. Herstellungsverfahren nach einem der Ansprüche 5 bis 7, dadurch gekennzeichnet, daß es außerdem die nachfolgenden Schritte umfaßt, die darin bestehen, daß eine zusätzliche Dielektrikum-Schicht ($D_6$) auf das Ganze aufgetragen wird, sodann zueinander parallele und zu den im Schritt (i) ausgebildeten durchsichtigen Elektroden rechtwinklige Elektroden auf der zusätzlichen Dielektrikum-Schicht ausgebildet werden.

FIG.1

FIG.2

FIG.3

FIG.4

FIG.5

FIG.6

**FIG_7a**

**FIG_7b**

**FIG_7c**

**FIG_7d**

FIG.7e

FIG.7f

FIG.7g

FIG.7h

| $\frac{D3}{Zv}$ | $D_2$ | $\frac{D4}{ZR}$ | $D_2$ | $\frac{D3}{Zv}$ | $D_2$ | $\frac{D4}{ZR}$ | $D_2$ | $\frac{D3}{Zv}$ | $D_2$ | $\frac{D4}{ZR}$ | $D_2$ | $\frac{D3}{Zv}$ | $D_2$ |
|---|---|---|---|---|---|---|---|---|---|---|---|---|---|

$D_1$

| ITO | | ITO | | ITO | | ITO | | ITO | | ITO | | ITO | |

Verre

## FIG_7i

Aℓ

D6

| $\frac{D3}{Zv}$ | $D_2$ | $\frac{D4}{ZR}$ | $D_2$ | $\frac{D3}{Zv}$ | $D_2$ | $\frac{D4}{ZR}$ | $D_2$ | $\frac{D3}{Zv}$ | $D_2$ | $\frac{D4}{ZR}$ | $D_2$ | $\frac{D3}{Zv}$ | $D_2$ |
|---|---|---|---|---|---|---|---|---|---|---|---|---|---|

$D_1$

| ITO | | ITO | | ITO | | ITO | | ITO | | ITO | | ITO | |

Verre

## FIG_7j